# EUROPÄISCHE PATENTANMELDUNG

(11) **EP 0 959 381 A1**
(43) Veröffentlichungstag der Anmeldung: **24.11.1999**
(21) Anmeldenummer: 99102185.8
(22) Anmeldetag: 04.02.1999
(51) Int. Cl.: G02F 1/1333, G02F 1/1347

(54) **Flüssigkristalldisplay**

(30) Priorität: 16.05.1998 DE 19822150
(71) Anmelder: Lüder, Ernst, Prof. Dr.-Ing. habil., D-70550 Stuttgart (DE)
(72) Erfinder: Lüder, Ernst, Prof, Dr.-Ing habil, 70192 Stuttgart (DE)
(74) Vertreter: Möbus, Daniela, Dr.-Ing.

(57) **Zusammenfassung**

Ein Flüssigkristalldisplay mit einer zwischen Deckelektroden (13) angeordneten Flüssigkristallzelle (15) und einem Substrat (11) aus einem flexiblen Material, wobei der Flüssigkristall (12) ein bistabiler, ferroelektrischer Flüssigkristall ist, die Dicke der Flüssigkristallzelle einem Viertel der Wellenlänge des Lichtes entspricht und zwischen den Deckelektroden (13) der Flüssigkristallzelle (15) Abstandshalter (16) angeordnet sind. Vorzugsweise kann eine schräg zur Substratoberfläche aufgebrachte Orientierungsschicht (14) vorgesehen sein.

## Beschreibung

Die Erfindung betrifft ein Flüssigkristalldisplay mit einer zwischen Deckelektroden angeordneten Flüssigkristallzelle und einem Substrat aus einen flexiblen Material, vorzugsweise einem Kunststoff-Foliensubstrat, wobei der Flüssigkristall ein bistabiler ferroelektrischer Flüssigkristall ist.

Ein solches Display ist bereits in der DE 196 49 761.2 beschrieben. Ferroelektrische Flüssigkristalle sind bekannt für ihre schnellen und bistabilen Schalteigenschaften. Anzeigen mit diesen Kristallen sind aber üblicherweise stoßempfindlich und reagieren mit einem Verlust der eingeschriebenen Information, sobald im Inneren der Kristallschicht ein Materialfluss ausgelöst wird. Bei dem bekannten Foliendisplay mit einem ferroelektrischen Flüssigkristall wird dieses Problem durch Verwendung besonders dünner Foliensubstrate sowie durch Verwendung eines Flüssigkristalls mit einer so genannten "Bookshelf"-Textur reduziert.

Der vorliegenden Erfindung liegt die Aufgabe zugrunde, ein ferroelektrisches Flüssigkristalldisplay mit einem flexiblen Substrat vorzuschlagen, das eine noch höhere mechanische Stabilität als die seither bekannten Displays aufweist.

Die Aufgabe wird mit einem Flüssigkristalldisplay der eingangs genannten Art erfindungsgemäß dadurch gelöst, dass die Dicke der Flüssigkristallzelle einem Viertel der Wellenlänge des Lichtes entspricht und dass zwischen den Deckelektroden der Flüssigkristallzelle Abstandshalter - vorzugsweise in einen gegenseitigen Abstand von 40 bis 60 µm - angeordnet sind. Die Scherkraft, die auf die Kristallschicht des Displays wirkt, hängt stark von deren Dicke ab. Durch die Verwendung einer Zelle mit einer Dicke, die einem Viertel der Wellenlänge des Lichtes entspricht, wird die Stoßempfindlichkeit also deutlich reduziert. Die Abstandshalter erhöhen die mechanische Stabilität zusätzlich, sodass ein gegen Druck, Biegung und Torsion unempfindliches Display entsteht. Auf der Rückseite des Displays kann ein diffuser oder spiegelnder Reflektor angeordnet sein, der dafür sorgt, dass die λ/4-Zelle zweimal vom Licht durchlaufen wird. Dadurch ist eine Halbierung der Dicke der Flüssigkristallzelle, die vorzugsweise 0,8 µm betragen kann, gegenüber Zellen bekannter Displays möglich. Die zwischen den Deckelektroden der Flüssigkristallzelle angeordneten Abstandshalter können entsprechend der Zelldicke eine Dicke von ca. 0,8 µm und einen Durchmesser von ca. 15 µm und vorzugsweise auf beiden Seiten ebene Flächen aufweisen. Diese Abstandshalter lassen sich photolithographisch oder drucktechnisch herstellen. Die Abstandshalter können jedoch auch mit einer klebenden Beschichtung versehen und auf die Deckelektrode der Flüssigkristallzelle aufstreubar sein. Auf den Deckschichten können Orientierungsschichten für den Flüssigkristall aus einer schräg zur substratoberfläche aufgestäubten oder aufgedampften SiOₓ-Schicht oder Ta₂O₅-Schicht aufgebracht sein. Eine solche Orientierungsschicht übt große Verankerungskräfte auf die Moleküle des Flüssigkristalls aus. Eine weitere Erhöhung der mechanischen Stabilität lässt sich durch Erzeugung eines Unterdrucks in der Flüssigkristallzelle erzielen. Die mechanischen Eigenschaften einer erfindungsgemäßen Anzeige von ca. 3 cm² Fläche sind typischerweise eine Druckbelastung von über 120 N/cm², ein Biegeradius kleiner als 1,5 cm und eine Schaltspannung von unter 5 V bei Temperaturen von 0 °C bis 60 °C.

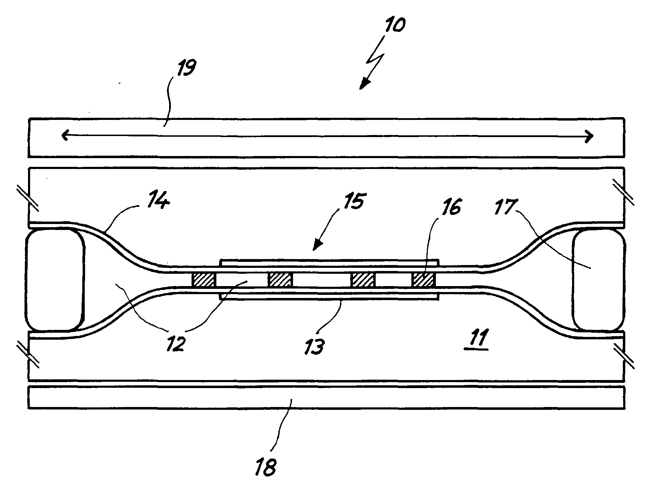

Nachfolgend wird anhand der Zeichnung der Aufbau eines erfindungsgemäßen Flüssigkristalldisplays näher beschrieben.

Die einzige Figur zeigt einen Querschnitt durch ein Display 10 mit einem Substrat 11 aus einem flexiblen Material und einem bistabilen, ferroelektrischen Flüssigkristall 12. Der Flüssigkristall 12 ist zwischen zwei Elektroden 13 und zwei Orientierungsschichten 14 angeordnet. Die Dicke der Flüssigkristallzelle wird durch Abstandshalter 16 bestimmt. Die Orientierungsschichten bestehen aus schräg aufgedampftem oder aufgestäubtem SiOₓ. In der Flüssigkristallzelle 15 herrscht außerdem ein Unterdruck, der dadurch erreicht werden kann, dass einem seitlich am Display 10 angeordneten Kleberahmen 17 nicht näher dargestellte Abstandshalter, beispielsweise goldbeschichtete Polymerkugeln beigemischt werden. Diese Kugeln dienen gleichzeitig der Durchkontaktierung zur Gegenplatte. Entlang des relativ dicken Kleberahmens 17 entsteht ein Reservoir für den Flüssigkristall 12, das auch Vacuolen enthalten kann. Auf der Rückseite des Displays 10 ist ein diffuser Spiegel 18 angeordnet, der ein zweimaliges Durchlaufen der Flüssigkristallzelle 15 durch das Licht bewirkt. Auf diese Weise kann die Dicke der Flüssigkristallzelle 15 auf ein Viertel der Wellenlänge des Lichtes reduziert werden. Auf der Sichtseite weist das Display 10 einen Polarisator 19 auf.

## Patentansprüche

1. Flüssigkristalldisplay mit einer zwischen Deckelektroden (13) angeordneten Flüssigkristallzelle (15) und einem Substrat (11) aus einem flexiblen Material, vorzugsweise einem Kunststoff-Foliensubstrat, wobei der Flüssigkristall (12) ein bistabiler, ferroelektrischer Flüssigkristall ist, dadurch gekennzeichnet, dass die Dicke der Flüssigkristallzelle (15) einem Viertel der Wellenlänge des Lichtes entspricht und dass zwischen den Deckelektroden (13) der Flüssigkristallzelle (15) Abstandshalter (16) angeordnet sind.

2. Flüssigkristalldisplay nach Anspruch 1, dadurch gekennzeichnet, dass die Abstände zwischen den Abstandshaltern 40 bis 60 µm betragen.

3. Flüssigkristalldisplay nach Anspruch 1 oder 2, dadurch gekennzeichnet, dass die Dicke der Flüssigkristallzelle ca. 0,8 µm beträgt.

4. Flüssigkristalldisplay nach einem der Ansprüche 1 bis 3, dadurch gekennzeichnet, dass auf den Deckelektroden (13) Orientierungsschichten (14) für den Flüssigkristall (12) aus einer schräg zur Substratoberfläche aufgestäubten oder aufgedampften SiOₓ-Schicht oder Ta₂O₅-Schicht aufgebracht sind.

5. Flüssigkristalldisplay nach einem der Ansprüche 1 bis 4, dadurch gekennzeichnet, dass auf der Rückseite des Displays (10) ein diffuser oder spiegelnder Reflektor (18) angeordnet ist.

6. Flüssigkristalldisplay nach einem der Ansprüche 1 bis 5, dadurch gekennzeichnet, dass die Abstandshalter (16) eine Dicke von ca. 0,8 µm und einen Durchmesser von ca. 15 µm aufweisen und vorzugsweise beidseitig mit ebenen Flächen versehen sind.

7. Flüssigkristalldisplay nach einem der Ansprüche 1 bis 6, dadurch gekennzeichnet, dass die Abstandshalter (16) eine klebende Beschichtung aufweisen und auf die Deckelektroden (13) der Flüssigkristallzelle (15) aufstreubar sind.

8. Flüssigkristalldisplay nach einen der Ansprüche 1 bis 7, dadurch gekennzeichnet, dass in der Flüssigkristallzelle (15) ein Unterdruck herrscht.
